# EUROPÄISCHE PATENTANMELDUNG

(11) **EP 3 511 884 A1**
(43) Veröffentlichungstag der Anmeldung: **17.07.2019**
(21) Anmeldenummer: 19150333.3
(22) Anmeldetag: 04.01.2019
(51) Int. Cl.: G06Q 10/08

(54) **VERFAHREN UND SYSTEM ZUR BIDIREKTIONALEN KOMMUNIKATION IN DER INTRALOGISTIK MITTELS SMARTGERÄT**

(30) Priorität: 10.01.2018 DE 102018100433; 19.04.2018 DE 102018109297
(71) Anmelder: STILL GmbH, 22113 Hamburg (DE)
(72) Erfinder: Viereck, Volker, 23898 Kühsen (DE); Krüger-Basjmeleh, Tino, 25469 Halstenbek (DE); Wittmann, Thomas, 21035 Hamburg (DE); Düwel, Erich, 21335 Lüneburg (DE)
(74) Vertreter: Patentship Patentanwaltsgesellschaft mbH

(57) **Zusammenfassung**

Die Erfindung betrifft ein Verfahren zur bidirektionalen Kommunikation zwischen mindestens einem technischen Prozessteilnehmer eines intralogistischen Systems und mindestens einer prozessteilnehmenden Betriebsperson (6), sowie ein intralogistisches System zur Durchführung des Verfahrens. Es wird vorgeschlagen, dass die Kommunikation über einen drahtlosen Datenaustausch zwischen dem technischen Prozessteilnehmer und einem von der Betriebsperson (6) getragenen mobilen Elektronikgerät mit integrierter Datenverarbeitungs-, Datensende- und Datenempfangseinrichtung sowie Informationsausgabe- und Eingabeeinrichtung, insbesondere einem Smartgerät (7), durchgeführt wird.

## Beschreibung

Die Erfindung betrifft ein Verfahren zur bidirektionalen Kommunikation zwischen mindestens einem technischen Prozessteilnehmer eines intralogistischen Systems und mindestens einer prozessteilnehmenden Betriebsperson, sowie ein intralogistisches System zur Durchführung des Verfahrens.

Unter einem intralogistischen System versteht man ein System, bei dem logistische Material- und Warenflüsse innerhalb eines Betriebsgeländes abgewickelt werden. Mit diesem Begriff wird eine Abgrenzung zum Warentransport außerhalb eines Werkes, z.B. durch eine Spedition, erreicht. Intralogistische Systeme umfassen insbesondere Geräte zur Lager- und Fördertechnik, Hebezeuge, Flurförderzeuge, Kommissionierflurförderzeuge, Palettiergeräte, Verpackungsgeräte sowie lagerhallenspezifische Einrichtungen, wie z.B. automatische Tore, und übergeordnete Datenverarbeitungseinrichtungen, wie z.B. Warenmanagementsysteme oder Lagerverwaltungssysteme. All diese Geräte und Einrichtungen bilden die technischen Prozessteilnehmer des intralogistischen Systems. Außerdem gehören zu diesem intralogistischen System auch prozessteilnehmende Betriebspersonen, z.B. Bedienpersonen von Flurförderzeugen, Lagermitarbeiter und Lagerleiter.

Teil eines intralogistischen Systems kann beispielsweise das Kommissionieren sein, also das Zusammenstellen von Warenlieferungen in einem Warenlager. Hierfür werden sehr häufig Kommissionierflurförderzeuge als eine Form von Flurförderzeugen eingesetzt. Dabei wird das Kommissionierflurförderzeug mit einem auf Lastgabeln befindlichen Ladungsträger, etwa einer Palette oder einem Drahtgitterkorb, durch die Regalgänge eines Warenlagers bewegt, in denen die zu kommissionierenden bzw. aufzunehmenden Waren gelagert sind. Der Kommissionierer bzw. die ausführende Person entnimmt dabei je nach Auftrag die im Regal befindlichen Waren, legt diese auf bzw. in den Ladungsträger des Kommissionierflurförderzeugs und muss sodann zum nächsten Aufnahmeort innerhalb des Warenlagers bzw. des Regalgangs des Warenlagers für die nächste Ware fahren. Wenn der jeweilige Auftrag zur Kommissionierung vollständig abgearbeitet ist, fährt der Kommissionierer mit dem Kommissionierflurförderzeug zu einer Warenabgabe. Die Fahrstrecken von einem Aufnahmeort zum nächsten sind dabei in der großen Mehrzahl kurze bis sehr kurze gerade Strecken innerhalb eines Regalgangs bzw. an einem Regal entlang in dem Warenlager. In der Summe entsteht jedoch durch die Vielzahl der erforderlichen Fahrbewegungen des Flurförderzeugs, die von dem Kommissionierer vorgenommen werden müssen, ein erheblicher Zeitbedarf, da der Kommissionierer zu einem Bedienstand des Kommissionierflurförderzeugs gehen muss, um die entsprechenden Fahrschalter zu betätigen und das Fahrzeug bei der Fahrbewegung zu steuern, und im Anschluss wieder zurück an die Position zum Aufnehmen der Waren.

Es sind daher Verfahren und Flurförderzeuge für eine teilautomatisierte Kommissionierung bekannt. Diese teilautomatisierte Kommissionierung erfolgt im Grundsatz ähnlich, nur muss der Kommissionierer das Flurförderzeug zumindest auf den geraden Fahrstrecken entlang eines Regals nicht mehr selbst führen, sondern das Flurförderzeug verfährt automatisch, so dass der Kommissionierer das Kommissionierflurförderzeug im Regalgang verlassen kann. Die Steuerung des Flurförderzeugs bei der Fahrt zur nächsten Aufnahmestation kann dabei beispielsweise durch eine Funkfernsteuerung, so etwa einen Funkhandschuh mit einer Funkfernsteuerungsfunktion, oder durch eine Steuerung des Flurförderzeugs über Sprachbefehle oder durch eine optische Personenerkennung erfolgen.

Beispielsweise ist eine Lösung mit einem Funkhandschuh bekannt, den die kommissionierende Person anzieht und durch den die Steuerung des Flurförderzeugs ermöglicht wird. Es können dabei Einzelfunktionen wie "vor", "zurück" usw. als Befehlstaster in den Handschuh integriert sein, die von der kommissionierenden Person, bzw. dem Kommissionierer, gedrückt werden können. Nach dem Aufnehmen einer bestimmten Ware an einem Aufnahmeort, somit nach erfolgter Kommissionierung, kann beispielsweise die "vor"-Befehlstaste an dem Handschuh von dem Kommissionierer gedrückt werden und das Flurförderzeug bewegt sich in dem Regalgang weiter, solange der Kommissionierer die Befehlstaste an dem Handschuh gedrückt hält. Durch die Integration des Funkbefehlsgebers in den Handschuh muss dieser nicht als eigener Gegenstand von dem Kommissionierer getragen werden und stört diesen nicht in seiner Bewegungsfreiheit.

Nachteilig an diesem Stand der Technik ist jedoch, dass die Nutzung eines solchen Handschuhs durch eine Mehrzahl von Personen zu Akzeptanzproblemen führen kann. Auch muss jedes Mal eine Bedienung mit der anderen Hand erfolgen. Die Funkhandschuhe haben den weiteren Nachteil, dass diese durch die tägliche Handhabung verschleißen und somit regelmäßig ersetzt werden müssen. Dadurch werden zusätzliche, laufende Kosten verursacht.

Bei dem zuvor beschriebenen System besteht auch grundsätzlich die Notwendigkeit, dass die die Kommissionierung durchführenden Mitarbeiter eingearbeitet und in das System eingewiesen werden müssen.

Aus der EP 2 533 119 A1 ist eine Vorrichtung zur Funkfernsteuerung eines Flurförderzeugs mit einem Funkhandschuh bekannt, das zur Kommissionierung eingesetzt werden kann.

In der EP 2 851 331 B1 ist ein Verfahren zur Steuerung eines Kommissionierflurförderzeugs beschrieben, bei dem eine optische Personenerkennung mittels Laserscanner erfolgt. Überschreitet der Kommissionierer eine virtuelle Schwelle in Fahrtrichtung, fährt das Fahrzeug dem Kommissionierer automatisch und selbständig hinterher und folgt diesem. Bleibt der Kommissionierer stehen, hält auch das Fahrzeug an.

In modernen Produktions- und Lagereinheiten ist nicht nur ein Informationsaustausch zwischen Maschinen untereinander gewünscht, sondern auch eine Kommunikation zwischen den Maschinen und den Menschen, die an den Produktions- oder Lagerprozessen teilnehmen. Dies ist besonders in der digitalen Industrie (auch als Industrie 4.0 bezeichnet), in der automatische oder teilautomatische Produktions- und Lagergeräte zum Einsatz kommen, von entscheidender Bedeutung.

Der vorliegenden Erfindung liegt daher die Aufgabe zugrunde, ein Verfahren der eingangs genannten Art sowie ein intralogistisches System zur Durchführung des Verfahrens so auszugestalten, dass dem Menschen als zentralen Akteur in der Intralogistik eine möglichst intuitive und bedienerfreundliche Möglichkeit geboten wird, Informationen zu empfangen und zu senden.

Diese Aufgabe wird verfahrensseitig erfindungsgemäß dadurch gelöst, dass die Kommunikation über einen drahtlosen Datenaustausch zwischen dem technischen Prozessteilnehmer und einem von der Betriebsperson getragenen mobilen Elektronikgerät mit integrierter Datenverarbeitungs-, Datensende- und Datenempfangseinrichtung sowie Informationsausgabe- und Eingabeeinrichtung, insbesondere einem Smartgerät, durchgeführt wird.

Smartgeräte besitzen die Fähigkeiten, Informationen zu erfassen, zu verarbeiten, zu speichern, anzuzeigen und mit ihrer Umgebung zu interagieren. Unter einem Smartgerät oder auch Smart Device versteht man insbesondere eine elektronische Einrichtung, die üblicherweise drahtlos mit einer anderen Einrichtung oder einem Netzwerk verbunden ist und interaktiv (gegebenenfalls auch autonom) agieren kann. Eine Funktion kann z.B. die Echtzeit-Erfassung von Daten innerhalb des betrieblichen Prozesses sein. Es können Informationen über den Ort, den Zustand und die Umgebung der technischen Prozessteilnehmer zeitnah zur Verfügung gestellt werden. Auch eine dezentrale Informationsverarbeitung und Entscheidungsfindung wird dadurch ermöglicht. Beispielsweise kann die Entscheidung, einen Prozess zu starten oder zu beenden, über das Smartgerät getroffen werden. Durch eine Vernetzung der Prozessteilnehmer untereinander können komplette Geschäftsprozesse ausgeführt werden. So kann beispielsweise ein logistisches Gerät selbstständig seinen Weg durch eine Logistikumgebung finden.

Im Rahmen der vorliegenden Erfindung ist unter einem Smartgerät insbesondere ein elektronisches Gerät zu verstehen, welches von Menschen mitgeführt werden kann. Gängige Beispiele von Smartgeräten sind Smartphones, Tablets, Smart Watches und Wearables. Diese Geräte besitzen heute schon die Möglichkeit, per Mobilfunk, WLAN, Bluetooth oder NFC (Near Field Communication) mit anderen Systemen zu kommunizieren. Bisher wurden diese Geräte aber hauptsächlich im Bereich der Unterhaltungselektronik und in der Telekommunikation (insbesondere im Mobilfunkbereich) eingesetzt. Mit der Erfindung wird das an sich bekannte Prinzip der Smartgeräte auf die Anwendung in der Intralogistik übertragen.

Das Smartgerät, das von der Betriebsperson getragen wird, bildet somit eine Mensch-Maschine-Schnittstelle zur Steuerung und Bedienung des technischen Prozessteilnehmers und ermöglicht eine Rückmeldung (Feedback) von dem technischen Prozessteilnehmer an die Betriebsperson.

In einer besonders bevorzugten Ausführungsform der Erfindung wird der drahtlose Datenaustausch zwischen mindestens einem Flurförderzeug, insbesondere einem automatisch oder teilautomatisch betriebenen Kommissionierflurförderzeug, und dem Smartgerät durchgeführt. Auf diese Weise kann eine Betriebsperson, die sich z.B. in einem Abstand zum Flurförderzeug befindet oder durch die Lagerhalle geht und das Smartgerät mitführt, bequem Betriebsanweisungen an das Flurförderzeug senden. Beispielsweise kann die Betriebsperson dem Flurförderzeug über das Smartgerät mitteilen, an welchem Punkt es anhalten soll, um Waren aufnehmen zu können. Beispielsweise kann die Betriebsperson dem Flurförderzeug über das Smartgerät mitteilen, an welcher Seite einer Regalstruktur (links oder rechts) sich ein teilautomatisiertes Flurförderzeug orientieren soll.

Eine weitere vorteilhafte Ausgestaltung sieht vor, dass der drahtlose Datenaustausch zwischen einer zentralen Datenverarbeitungseinrichtung eines Warenmanagementsystems und/oder Lagerverwaltungssystems und dem Smartgerät durchgeführt wird. Dabei kann z.B. das Warenmanagementsystem der Betriebsperson, beispielsweise einem Lagermitarbeiter, über das von der Betriebsperson mitgeführte Smartgerät per Anzeige mitteilen, an welcher Stelle eine Ware eingelagert werden soll. Die Betriebsperson führt dann die gewünschte Aktion aus und quittiert per Smartgerät. Das Warenmanagementsystem kann anschließend diese Information verarbeiten.

Zweckmäßigerweise wird als Smartgerät ein Armbandgerät verwendet. Das Prinzip solcher Armbandgeräte ist an sich in Form so genannter Smart Watches aus der Consumerbranche bekannt.

Der drahtlose Datenaustausch wird vorzugsweise über eine Netzwerkverbindung, insbesondere Internetverbindung, durchgeführt. Hierfür kann z.B. eine Breitbandverbindung über Mobilfunk oder WLAN verwendet werden. Durch die Einbindung des Smartgeräts in ein Netzwerk können mit unterschiedlichen Prozessteilnehmern an verschiedenen Orten Informationen ausgetauscht werden, so dass auch komplexe Betriebsabläufe koordiniert werden können.

In einer besonders vorteilhaften Ausführungsform der Erfindung wird das Flurförderzeug mittels des Smartgeräts gesteuert. Insbesondere können Fahrgeschwindigkeit und/oder Orientierung und/oder Anhaltepunkte des Flurförderzeugs mittels des Smartgeräts vorgegeben werden. Beispielsweise kann ein Lagerleiter als prozessteilnehmende Betriebsperson vom Lagerverwaltungssystem per Smartgerät, das der Lagerleiter mitführt, über einen erfolgten Unfall mit automatischer Geschwindigkeitsreduzierung des betroffenen Flurförderzeugs informiert werden. Nach Räumung der Unfallstelle kann anschießend der Lagerleiter mittels des mitgeführten Smartgerätes die normale Fahrgeschwindigkeit des Flurförderzeugs wieder freischalten. Auch die Orientierung des Flurförderzeugs kann per Fernbedienung mittels des Smartgeräts beeinflusst werden. Möchte beispielsweise die Betriebsperson, dass sich das autonome Flurförderzeug an einer links- oder rechtseitigen Kontur einer Regalreihe orientiert, kann sie diese Anweisung dem Flurförderzeug per Smartgerät mitteilen.

Eine Weiterbildung des Erfindungsgedankens sieht vor, dass die Betriebsperson über das Smartgerät identifiziert wird. Dies kann z.B. über die Identifikation eines Fingerabdrucks auf einem Touchdisplay des Smartgeräts erfolgen. Damit kann das Eingeben von Zugangscodes für System- oder Fahrzeugzugriffe entfallen. Persönliche Einstellungen können im Flurförderzeug automatisch geladen werden. Außerdem können nur für die jeweilige Betriebsperson relevante Daten gezielt abgerufen werden.

In einer besonders zweckmäßigen Ausgestaltung wird die Betriebsperson über eine taktile Informationsausgabeeinrichtung des Smartgeräts informiert. Dies ist deshalb von Vorteil, weil im üblichen Betriebsablauf Augen und Ohren der Betriebsperson aufgrund vielfältiger Informationen aus der Umgebung oder komplexer Aufgabenstellungen bereits überlastet sind. Taktile Informationen können dagegen über noch unbelastete Tast- und Berührungssinne wahrgenommen werden. Hierzu kann das Smartgerät z.B. Vibrationen oder Vibrationsmuster erzeugen. Die taktilen Informationen ermöglichen somit eine taktile Rückmeldung und somit ein taktiles Feedback von dem technischen Prozessteilnehmer an die Betriebsperson.

Das Smartgerät kann darüber hinaus dazu verwendet werden, Betriebszustände des Flurförderzeugs der Betriebsperson, z.B. der Bedienperson des Flurförderzeugs oder dem Lagerleiter, mitzuteilen. So kann ein zu geringer Ladezustand einer Traktionsbatterie über das Smartgerät automatisch gemeldet werden.

Die Erfindung betrifft ferner ein intralogistisches System mit einer Einrichtung zur bidirektionalen Kommunikation zwischen mindestens einem technischen Prozessteilnehmer und mindestens einer prozessteilnehmenden Betriebsperson.

Hierbei wird die gestellte Aufgabe dadurch gelöst, dass die Einrichtung ein von der Betriebsperson tragbares mobiles Elektronikgerät mit integrierter Datenverarbeitungs-, Datensende- und Datenempfangseinrichtung sowie Informationsausgabe- und Eingabeeinrichtung, insbesondere ein Smartgerät, umfasst, mit dem ein Verfahren nach einem der Ansprüche 1 bis 9 durchführbar ist.

Die Erfindung bietet zahlreiche Vorteile:
Da Smartgeräte am Körper der Betriebsperson getragen werden können, reduzieren sich viele Wegstrecken, die sonst zur Kommunikation nötig wären. Beispielsweise braucht die Betriebsperson nicht mehr zu einer Bedieneinrichtung am Regal gehen, um eine Einlagerung von Waren zu quittieren. Die Bedienperson muss auch nicht mehr zum Unfallort gehen, um ein Flurförderzeug wieder freizuschalten. Auch zum Umschalten auf eine bestimmte Orientierungsseite muss die Betriebsperson nicht mehr zum Flurförderzeug gehen. All diese Aktionen kann die Betriebsperson auf bequeme Art und Weise über das mitgeführte Smartgerät erledigen. Darüber hinaus besitzen Smartgeräte eine hohe Akzeptanz bei den Betriebspersonen, weil sie das Prinzip solcher Geräte an sich bereits aus dem Consumerbereich als Standard kennen.

Das von der Betriebsperson getragene Smartgerät, das bevorzugt ein Touch-Display, eine Spracheingabe und Sprachausgabe und ein taktiles Feedback aufweist, bildet somit eine Mensch-Maschine-Schnittstelle mit Feedback von dem technischen Feedback von dem technischen Prozessteilnehmer zu der Betriebsperson, die eine bidirektionale Kommunikation zwischen der Betriebsperson und dem technischen Prozessteilnehmer des intralogistischen Systems bei direkter und intuitiver Kommunikation zwischen der Betriebsperson und dem technischen Prozessteilnehmer ermöglicht.

Weitere Vorteile und Einzelheiten der Erfindung werden anhand der in den schematischen Figuren dargestellten Ausführungsbeispiele näher erläutert. Hierbei zeigen
- Figur 1: ein intralogistisches System mit Regallager, Flurförderzeug und Betriebsperson,
- Figur 2: die Betriebsperson vor dem Regal und
- Figur 3: das Smartgerät als Armbandgerät.

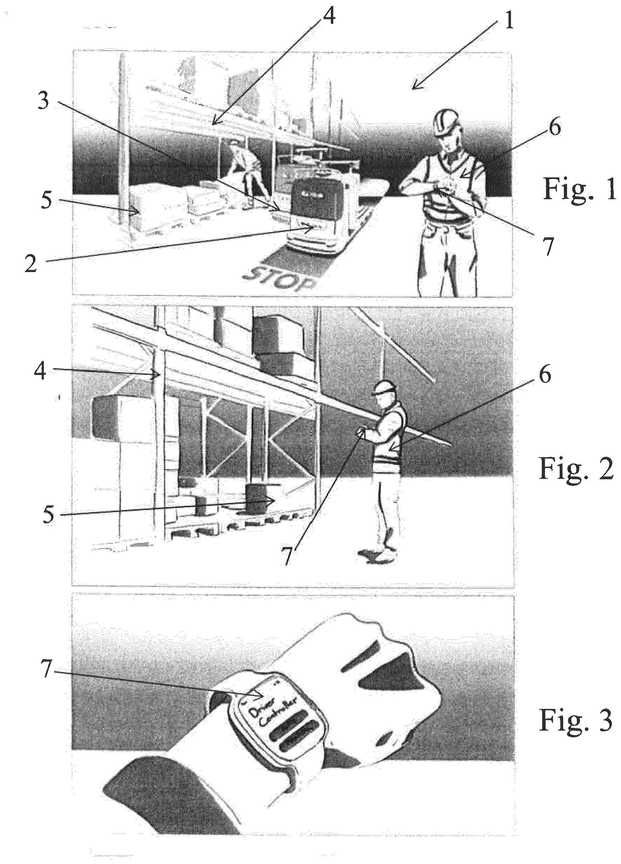

In der Figur 1 ist ein intralogistisches System 1 mit Warenregalen 4 dargestellt. Als autonome oder teilautonome Kommissionierflurförderzeuge ausgebildete Flurförderzeuge 2 und 3 bewegen sich entsprechend vorprogrammierter Betriebsabläufe entlang der Warenregale 4, um Waren 5 an bestimmten Orten aufzunehmen oder abzugeben. Die Betriebsperson 6 trägt am Armgelenk ein als Armbandgerät ausgebildetes Smartgerät 7, welches über eine Breitbandmobilfunkverbindung mit dem Internet verbunden ist. Die Flurförderzeuge 2 und 3 sind ebenfalls über eine Breitbandmobilfunkverbindung mit dem Internet verbunden und können so mit dem von der Betriebsperson 6 getragenen Smartgerät 7 kommunizieren. Die Betriebsperson 6 kann über das Smartgerät 7 auf bequeme Art und Weise Betriebsanweisungen und/oder Betriebsdaten an ein Flurförderzeug 2 bzw. 3 oder an mehrere Flurförderzeuge 2 und 3 erteilen. Das Flurförderzeug 2 bzw. 3 kann der Betriebsperson 6 an dem Smartgerät 7 Betriebszustände des Flurförderzeugs 2, 3 mitteilen und anzeigen. Beispielsweise kann ein in der Figur nicht dargestelltes Lagerverwaltungssystem der Betriebsperson 6 per Netzwerkverbindung dem Smartgerät 7 mitteilen, an welcher Stelle der Warenregale 4 Ware 5 eingelagert oder ausgelagert werden soll. Daraufhin kann die Betriebsperson 6 das Flurförderzeug 2 oder 3 per Smartgerät 7 anweisen, an einer bestimmten Stelle vor dem Warenregal 4 anzuhalten, oder die Betriebsperson 6 kann an diese Stelle laufen, wenn das teilautonome Flurförderzeug 2, 3 der Betriebsperson 6 selbstständig und automatisch folgt. Der Betriebsperson 6 kann an dem Smartgerät 7 beispielsweise die nächste Stelle angezeigt werden, an welcher eine Ware ein- oder ausgelagert werden soll.

Die Figur 2 zeigt das Warenregal 4 aus Figur 1 und die davor stehende Betriebsperson 6. Die Betriebsperson 6 kann über das Smartgerät 7 die Einlagerung oder Auslagerung der Ware 5 quittieren. Ein Warenmanagementsystem des intralogistischen Systems 1 kann diese Quittierung weiterverarbeiten.

In der Figur 3 ist das Smartgerät 7 in einer Detailansicht gezeigt. Es ist als Armbandgerät in Form einer an sich bekannten Smart Watch ausgeführt und weist eine berührungsempfindliche Anzeige- und Eingabefläche auf.

## Patentansprüche

1. Verfahren zur bidirektionalen Kommunikation zwischen mindestens einem technischen Prozessteilnehmer eines intralogistischen Systems und mindestens einer prozessteilnehmenden Betriebsperson, **dadurch gekennzeichnet, dass** die Kommunikation über einen drahtlosen Datenaustausch zwischen dem technischen Prozessteilnehmer und einem von der Betriebsperson (6) getragenen mobilen Elektronikgerät mit integrierter Datenverarbeitungs-, Datensende- und Datenempfangseinrichtung sowie Informationsausgabe- und Eingabeeinrichtung, insbesondere einem Smartgerät (7), durchgeführt wird.

2. Verfahren nach Anspruch 1, **dadurch gekennzeichnet, dass** der drahtlose Datenaustausch zwischen mindestens einem Flurförderzeug (2, 3), insbesondere einem automatisch oder teilautomatisch betriebenen Kommissionierflurförderzeug, und dem Smartgerät (7) durchgeführt wird.

3. Verfahren nach Anspruch 1 oder 2, **dadurch gekennzeichnet, dass** der drahtlose Datenaustausch zwischen einer zentralen Datenverarbeitungseinrichtung eines Warenmanagementsystems und/oder Lagerverwaltungssystems und dem Smartgerät (7) durchgeführt wird.

4. Verfahren nach einem der Ansprüche 1 bis 3, **dadurch gekennzeichnet, dass** als Smartgerät (7) ein Armbandgerät verwendet wird.

5. Verfahren nach einem der Ansprüche 1 bis 4, **dadurch gekennzeichnet, dass** der drahtlose Datenaustausch über eine Netzwerkverbindung, insbesondere Internetverbindung, durchgeführt wird.

6. Verfahren nach einem der Ansprüche 2 bis 5, **dadurch gekennzeichnet, dass** das Flurförderzeug (2, 3) mittels des Smartgeräts (7) gesteuert wird.

7. Verfahren nach Anspruch 6, **dadurch gekennzeichnet, dass** Fahrgeschwindigkeit und/oder Orientierung und/oder Anhaltepunkte des Flurförderzeugs (2, 3) mittels des Smartgeräts (7) vorgegeben werden.

8. Verfahren nach einem der Ansprüche 1 bis 7, **dadurch gekennzeichnet, dass** die Betriebsperson (6) über das Smartgerät (7) identifiziert wird.

9. Verfahren nach einem der Ansprüche 1 bis 8, **dadurch gekennzeichnet, dass** die Betriebsperson (6) über eine taktile Informationsausgabeeinrichtung des Smartgeräts (7) informiert wird.

10. Intralogistisches System mit einer Einrichtung zur bidirektionalen Kommunikation zwischen mindestens einem technischen Prozessteilnehmer und mindestens einer prozessteilnehmenden Betriebsperson, **dadurch gekennzeichnet, dass** die Einrichtung ein von der Betriebsperson (6) tragbares mobiles Elektronikgerät mit integrierter Datenverarbeitungs-, Datensende- und Datenempfangseinrichtung sowie Informationsausgabe- und Eingabeeinrichtung, insbesondere ein Smartgerät (7), umfasst, mit dem ein Verfahren nach einem der Ansprüche 1 bis 9 durchführbar ist.
